# EUROPÄISCHE PATENTSCHRIFT

(11) **EP 0 922 839 B1**
(45) Veröffentlichungstag und Bekanntmachung des Hinweises auf die Patenterteilung: **14.08.2002**
(21) Anmeldenummer: 98119979.7
(22) Anmeldetag: 22.10.1998
(51) Int. Cl.: F01M 5/00, G05D 23/13, F01P 7/16

(54) **Thermostatventil zur Regelung der Temperatur einer Druck- und Steuerflüssigkeit über eine By-Pass-Verbindung**
Thermostatic valve for temperature control of a pressure and control liquid over a bypass connection
Vanne thermostatique pour contrôler la température d'un liquide de pression et de commande par une connexion de dérivation

(30) Priorität: 03.12.1997 DE 19753551
(43) Veröffentlichungstag der Anmeldung: 16.06.1999
(73) Patentinhaber: Ford Global Technologies, Inc., A subsidiary of Ford Motor Company, Dearborn, Michigan 48126 (US)
(72) Erfinder: Schmitz-Koch, Heinz W., 50999 Köln (DE); Hellriegel, Harald, 51491 Overath (DE)
(74) Vertreter: Drömer, Hans-Carsten, Dipl.-Ing.

(56) Entgegenhaltungen:
- EP-A- 0 154 134
- DE-A- 2 652 539
- DE-A- 2 854 762
- FR-A- 2 655 702
- FR-A- 2 739 894
- US-A- 3 913 831
- US-A- 4 190 198

## Beschreibung

Die Erfindung bezieht sich auf ein Thermostatventil zur Regelung der Temperatur einer Druck- und Steuerflüssigkeit über einen By-Pass der im Oberbegriff des Patentanspruches 1 erläuterten Art.

Aus der EP 0 154 134 A ein Thermostatventil für eine Brennkraftmaschine mit einem Dehnstoffelement bekannt, das auf ein Ventilverschlußglied einwirkt, das mit einem Ventilsitz in einem Ventilgehäuse zusammenwirkt. Das Gehäuse des Dehnstoffelementes trägt ein zweites Ventilverschlußglied, das einer den By-Pass steuernden Ventildurchflußöffnung zugeordnet ist und das über das Gehäuse des Dehnstoff-elementes axial verschiebbar ist, um fensterartige Durchlässe für die By-Pass-Verbindung zu öffnen. Das bekannte Thermostatventil weist den Nachteil auf, daß auf das die By-Pass-Verbindung steuernde Ventilglied der in den miteinander zu verbindenden Flüssigkeitsleitungen wirkende unterschiedliche Flüssigkeitsdruck derart einwirkt, daß die hierbei auftretende Druckdifferenz die reine temperaturabhängige Steuerung durch das Dehnstoffelement beeinträchtigt.

Die Aufgabe der Erfindung ist es, ein Thermostatventil zur Regelung der Temperatur einer Druck- und Steuerflüssigkeit über eine By-Pass-Verbindung derart zu verbessern, daß die gewünschte temperaturabhängige Regelung unabhängig von den in den beiden miteinander zu verbindenden Flüssigkeitsleitungen herrschenden Druckverhältnissen ist.

Gemäß der Erfindung wird diese Aufgabe gelöst, indem bei einem Thermostatventil zur Regelung der Temperatur einer Druck- und Steuerflüssigkeit über eine By-Pass-Verbindung der im Oberbegriff des Patentanspruches 1 erläuterten Art, die im Kennzeichenteil des Patentanspruches 1 aufgezeigten Merkmale angewendet werden.

Dadurch, daß im Ventilgehäuse ein Steuerzylinder ortsfest angeordnet ist, der in seitlichen Abflachungen fensterartige Öffnungen zur Herstellung der By-Pass-Verbindung aufweist, die über den in dessen Innenbohrung entgegen der Kraft einer Feder verschiebbaren, als Steuerbund für die Öffnungen wirkenden Gehäuse des Dehnstoffelementes steuerbar sind und der Steuerzylinder in seiner Innenbohrung mit zu den Abflachungen mit den Öffnungen am Umfang versetzt angeordneten Druckausgleichsnuten versehen ist, die für einen Druck- und Steuerflüssigkeitszutritt auch an das andere Ende des Gehäuses des Dehnstoffelementes sorgen, wird ein Thermostatventil zur Regelung der Temperatur einer Druck- und Steuerflüssigkeit über eine By-Pass-Verbindung geschaffen, die weitgehend unabhängig von den in den miteinander zu verbindenden Flüssigkeitsleitungen auftretenden Druckunterschieden ist.

In den Patentansprüchen 2 - 4 sind weitere zweckmäßige Auslegungen des erfindungsgemäßen Thermostatventils erläutert.

Die Erfindung wird in Zusammenhang mit dem in den Zeichnungen gezeigten Ausführungsbeispiels näher erläutert. Es zeigt:
- Fig. 1: einen vertikalen Teilschnitt durch ein erfindungsgemäßes Thermostatventil in Kaltstellung, bei der die By-Pass-Verbindung geöffnet ist;
- Fig. 2: einen vertikalen Teilschnitt durch das Thermostatventil in Fig. 1 in Heiß-Stellung, bei der die By-Pass-Verbindung geschlossen ist;
- Fig. 3: einen horizontalen Schnitt entlang der Linie III-III in Fig. 2 ;
- Fig. 4: einen vertikalen Teilschnitt durch ein erfindungsgemäßes Thermostatventil in Kaltstellung bei einer anderen Führung der Druck- und Steuerflüssigkeitsströme und
- Fig. 5: einen vertikalen Teilschnitt durch das Thermostatventil nach Fig. 4 in Heiß-Stellung.

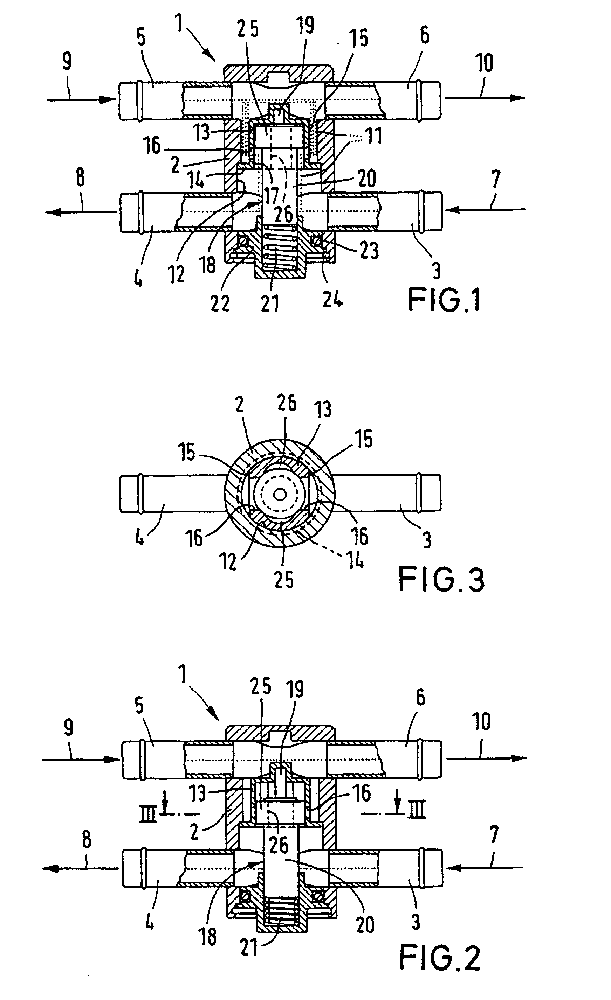

In den Figuren 1 - 3 ist ein erfindungsgemäßes Thermostatventil zur Regelung der Temperatur einer Druck- und Steuerflüssigkeit über eine By-Pass-Verbindung in einer Direkt-Strömungsanordnung gezeigt.

Das Thermostatventil 1 besteht im wesentlichen aus einem Ventilgehäuse 2 mit vier Leitungs-Anschlußstutzen 3, 4, 5 und 6 zum Anschluß von Flüssigkeitsleitungen, wobei die Flüssigkeitssströme durch Pfeile 7, 8 , 9 und 10 angedeutet sind.

Der Pfeil 7 bezeichnet einen Flüssigkeitsstrom, der bei Kaltstellung des Thermostatventiles 1 die Druck- und Steuerflüssigkeit über die By-Pass-Verbindung Pfeil 11 unmittelbar zum Flüssigkeitsstrom 10 gelangen läßt, nachdem die an sich weiterhin offene Verbindung des Flüssigkeitsstroms 8 zu einem Wärmeaustauscher und von diesem zurückkehrend über den Flüssigkeitsstrom 9 normalerweise einen wesentlich höheren Durchflußwiderstand aufweist.

Zur Steuerung der By-Pass-Verbindung 11 ist im Ventilgehäuse 2 in einer Stufenbohrung 12 ein Steuerzylinder 13 angeordnet, der sich über einen Flansch 14 an dem Absatz der Stufenbohrung 12 abstützt.

Der Steuerzylinder 13 ist miteinander gegenüberliegenden Abflachungen oder Nuten 15 versehen, in denen fensterartige Öffnungen 16 zur Herstellung der By-Pass-Verbindung angeordnet sind. Der Steuerzylinder 13 weist eine Innenbohrung 17 auf, in der das Dehnstoffelement 18 aufgenommen wird. Das Dehnstoffelement 18 besteht in bekannter Weise aus einem austreibbaren Kolben 19 und einem Gehäuse 20 und wird durch die Kraft einer Feder 21, die sich in einem Deckel 22 im Ventilgehäuse 2 abstützt, in Anlage an den Boden des Steuerzylinders 13 gehalten. Der Deckel 22 ist gegenüber dem Ventilgehäuse 2 über einen O-Ring 23 abgedichtet und über einen Sprengring 24 befestigt.

Das Gehäuse 20 des Dehnstoffelementes 18 weist hierbei einen Art Steuerbund 25 auf, der eng toleriert in der Innenbohrung 17 des Steuerzylinders 13 axial verlagerbar ist.

Bei der in Fig. 1 gezeigten Kalt-Stellung des Thermostatventiles bringt der Flüssigkeitsstrom 7 keine Wärmezufuhr, das Dehnstoffelement 18 verbleibt in seiner eingefahrenen Ausgangslage und der Steuerbund 25 hat hierdurch die fensterartigen Öffnungen 16 geöffnet, so daß die Druck- und Steuerflüssigkeit den Weg des geringeren Widerstandes über die By-Pass-Verbindung 11 nehmen kann.

Betrachten wir nun die Fig. 2, in der das Thermostatventil in seiner Heiß-Stellung dargestellt ist. Der Flüssigkeitsstrom 7 ist nunmehr heiß und kann das Gehäuse 20 des Dehnstoffelementes 18 direkt erwärmen, wodurch der Kolben 19 aus dem Gehäuse 20 ausgetrieben wird. Der am Gehäuse 20 ausgebildete Steuerbund 25 schließt hierdurch die fensterartigen Öffnungen der By-Pass-Verbindung, so daß die heiße Flüssigkeit gezwungen ist, den Weg über die Flüssigkeitsströme 7, 8, 9 und 10 zu durchlaufen, der über den Wärmetauscher führt.

Der Verlauf der Flüssigkeitsströme im Thermostatventil ist durch punktierte Linien angedeutet.

Betrachten wir nun Fig. 3, aus der ein wesentlicher Aspekt des erfindungsgemäßen Thermostatventiles ersichtlich ist. Aus dem Horizontalschnitt durch den Bereich der fensterartigen Öffnungen 16 wird ersichtlich, daß am Umfang versetzt zu diesen fensterartigen Öffnungen 16 Druckausgleichsnuten 26 vorgesehen sind, die dafür sorgen, daß der Flüssigkeitsdruck zu beiden Seiten des eigentlichen Ventilgliedes in Form des Steuerbundes 25 am Gehäuse 20 des Dehnstoffelementes 18 vorhanden ist. Damit wird die gewünschte temperaturabhängige Steuerung der By-Pass-Verbindung unabhängig von den in den unterschiedlichen Leitungen auftretenden Druckdifferenzen.

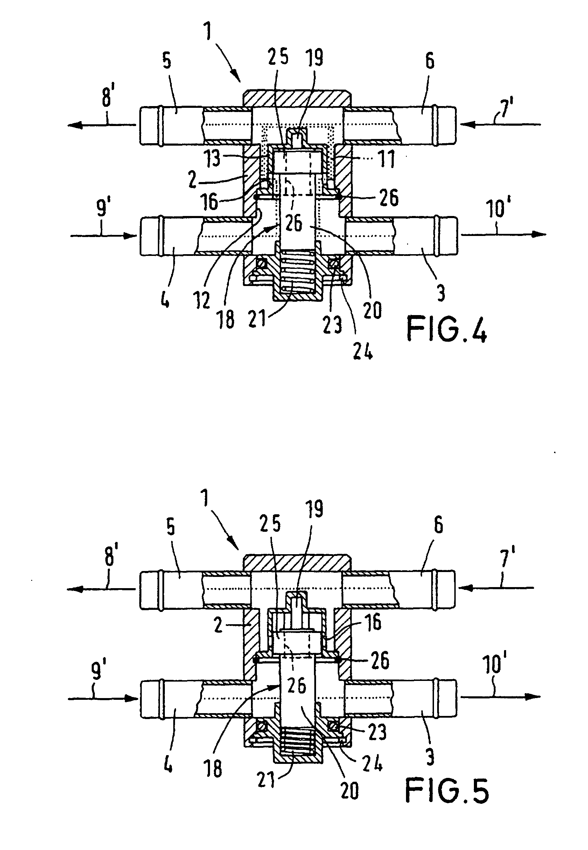

In den Figuren 4 und 5 ist das erfindungsgemäße Thermostatventil in einer Anordnung gezeigt, in der die Anschlüße 3, 4, 5 und 6 mit anderen Flüssigkeitströmen beaufschlagt werden, die zur Unterscheidung mit den Flüssigkeitsströmen in den Figuren 1 und 2 mit einem Strich-Index versehen sind.

Der Flüssigkeitsstrom 7' kommt von der Druck- und Steuerflüssigkeitsquelle und führt über den Flüssigkeitsstrom 8' zum Wärmetauscher. Vom Wärmetauscher kommt der Flüssigkeitsstrom 9' und führt über den Flüssigkeitsstrom 10' zurück zu dem mit Druck- und Steuerflüssigkeit versorgten Aggregat.

Der wesentliche Unterschied dieser anderen Führung der Flüssigkeitsströme liegt darin, daß, wenn der Flüssigkeitsstrom 7' heiß ist, er das Dehnstoffelement 18 nur indirekt, d.h., über den Wärmeaustausch vom Steuerzylinder 13 zum Steuerbund 25 hin erwärmt. Dementsprechend ist die Reaktion des Dehnstoffelementes 18 auf Temperaturschwankungen der Druck- und Steuerflüssigkeit stark verzögert, so daß die Häufigkeit einer Schaltung des Thermostatventiles verringert wird, was im Sinne der Gleichförmigkeit des Betriebes des Aggregates, das mit Druck- und Steuerflüssigkeit versorgt wird, vorteilhaft ist.

Das in den Figuren 1 bis 5 gezeigte Ausführungsbeispiel eines erfindungsgemäßen Thermostatventiles ist selbstverständlich nicht auf die unmittelbar gewählte konstruktive Ausführungsform beschränkt, vielmehr ist es denkbar, daß z.B. bei gegebenen Fertigungsmöglichkeiten das Bauteil des Steuerzylinders in das Gehäuse des Thermostatventiles integriert werden kann.

## Patentansprüche

1. Thermostatventil zur Regelung der Temperatur einer Druck- und Steuerflüssigkeit über eine By-Pass-Verbindung mit einem in einem Ventilgehäuse (2) angeordneten Dehnstoffelement (18), dessen Kolben (19) ortsfest gehalten und dessen Gehäuse (20) axial verlagerbar angeordnet ist, um fensterartige Öffnungen zur Bereitstellung der By-Pass-Verbindung über ein Ventilteil zu steuern, wobei
- im Ventilgehäuse (2) ein Steuerzylinder (13) ortsfest angeordnet ist, der in seitlichen Abflachungen (15) fensterartige Öffnungen (16) zur Herstellung der By-Pass-Verbindung aufweist und der in seiner Innenbohrung (17) das mit einem Steuerbund (25) versehene Gehäuse (20) des Dehnstoffelementes (18) entgegen der Kraft einer Feder (21) verschiebbar aufnimmt, **DADURCH GEKENNZEICHNET, DAß**
- der Steuerzylinder (13) in seiner Innenbohrung (17) mit zu den Abflachungen (15) mit den fensterartigen Öffnungen (16) am Umfang versetzt angeordneten Druckausgleichsnuten (26) versehen ist, die für einen Druck- und Steuerflüssigkeitszutritt auch an das andere Ende des Gehäuses (20) des Dehnstoffelementes (18) und des Steuerbundes (25) sorgen.

2. Thermostatventil zur Regelung der Temperatur einer Druck- und Steuerflüssigkeit über eine By-Pass-Verbindung nach Anspruch 1,
**dadurch gekennzeichnet, daß**
- über die am Ventilgehäuse (12) vorgesehenen Anschlüsse (3. 4, 5 und 6) die Flüssigkeitsströme (7,8, 9 und 10) derart geführt werden, daß der ggf. heiße Flüssigkeitsstrom (7) unmittelbar auf das Gehäuse (20) des Dehnstoffelementes (18) trifft und damit für eine direkte Erwärmung sorgt.

3. Thermostatventil zur Regelung der Temperatur einer Druck- und Steuerflüssigkeit über eine By-Pass-Verbindung nach Anspruch 1,
**dadurch gekennzeichnet, daß**
- die Anschlüsse (3, 4, 5 und 6) am Ventilgehäuse (2) derart mit Flüssigkeitsströmen (7', 8', 9' und 10') beaufschlagt werden, daß der ggf. heiße Flüssigkeitsstrom (7') auf den Steuerzylinder (13) trifft, so daß das Dehnstoffelement (18) über den Wärmeaustausch zwischen dem Steuerzylinder (13), dem Kolben (19) und dem Steuerbund (25) in indirekter, und damit verlangsamter Weise erfolgt.

4. Thermostatventil zur Regelung der Temperatur einer Druck- und Steuerflüssigkeit über eine By-Pass-Verbindung nach einem der Ansprüche 1 - 3,
**dadurch gekennzeichnet, daß**
- der Steuerzylinder (13) mit den Abflachungen (15) und den fensterartigen Öffnungen (16) sowie den Druckausgleichsnuten (26) bei gegebener Fertigungsmöglichkeit in einem Stück mit dem Ventilgehäuse (2) ausgebildet ist.

## Claims

1. Thermostatic valve for controlling the temperature of a pressure and control liquid via a bypass connection, having an expansion element (18), which is arranged in a valve housing (2) and the piston (19) of which is held in a stationary position and the housing (20) of which is arranged so as to be axially displaceable, in order to control window-like openings for providing the bypass connection via a valve part,
- a control cylinder (13) being arranged in a stationary position in the valve housing (2), which control cylinder, in lateral flattened sections (15), has window-like openings (16) for producing the bypass connection and in its inner bore (17) receives the housing (20), which is provided with a control collar (25), of the expansion element (18) in such a manner that it can be displaced counter to the force of a spring (21), **characterized in that**
- the control cylinder (13) is provided in its inner bore (17) with pressure-compensation grooves (26), which are arranged offset with respect to the flattened sections (15) with the window-like openings (16) at the circumference and ensure that pressure and control liquid also passes to the other end of the housing (20) of the expansion element (18) and of the control collar (25).

2. Thermostatic valve for controlling the temperature of a pressure and control liquid by means of a bypass connection according to Claim 1, **characterized in that**
- the liquid streams (7, 8, 9 and 10) are guided via the connections (3, 4, 5 and 6) provided on the valve housing (12) in such a manner that the liquid stream (7), which may be hot, comes into direct contact with the housing (20) of the expansion element (18) and is therefore responsible for direct heating.

3. Thermostatic valve for controlling the temperature of a pressure and control liquid by means of a bypass connection according to Claim 1, **characterized in that**
- the connections (3, 4, 5 and 6) on the valve housing (2) are acted on by liquid streams (7', 8', 9' and 10') in such a manner that the liquid stream (7'), which may be hot, comes into contact with the control cylinder (13), so that the heating of the expansion element (18) takes place indirectly, and therefore more slowly, as a result of the heat exchange between the control cylinder (13), the piston (19) and the control collar (25).

4. Thermostatic valve for controlling the temperature of a pressure and control liquid by means of a bypass connection according to one of Claims 1-3, **characterized in that**
- the control cylinder (13) having the flattened sections (15) and the window-like openings (16), and also the pressure-compensation grooves (26), is formed integrally with the valve housing (2) given a suitable production facility.

## Revendications

1. Vanne thermostatique pour contrôler la température d'un liquide de pression et de commande par une connexion de dérivation, comprenant un élément en matière extensible (18) disposé dans un carter de vanne (2), dont le piston (19) est maintenu en position fixe et dont le carter (20) est disposé de manière déplaçable axialement, afin de commander, par le biais d'une partie de vanne, des ouvertures en forme de fenêtre pour mettre à disposition la connexion de dérivation,
- un cylindre de commande (13) étant disposé en position fixe dans le carter de vanne (2), et présentant dans des parties aplaties latérales (15) des ouvertures en forme de fenêtre (16) pour la création de la connexion de dérivation, et recevant de manière déplaçable, dans son alésage intérieur (17), le carter (20) pourvu d'un épaulement de commande (25) de l'élément en matière extensible (18), à l'encontre de la force d'un ressort (21),
**caractérisée en ce que**
- le cylindre de commande (13) est pourvu, dans son alésage intérieur (17), de rainures d'équilibrage de la pression (26) disposées de manière décalée sur la périphérie par rapport aux parties aplaties (15) avec les ouvertures en forme de fenêtre (16), lesquelles rainures assurent l'alimentation en fluide de pression et de commande également à l'autre extrémité du carter (20) de l'élément en matière extensible (18) et de l'épaulement de commande (25).

2. Vanne thermostatique pour contrôler la température d'un liquide de pression et de commande par une connexion de dérivation selon la revendication 1,
**caractérisée en ce que**
- les courants de liquide (7, 8, 9 et 10) sont guidés par les raccords (3, 4, 5 et 6) prévus sur le carter de vanne (2), de telle sorte que le courant de liquide éventuellement chaud (7) parvienne directement sur le carter (20) de l'élément en matière extensible (18) et assure ainsi un chauffage direct.

3. Vanne thermostatique pour contrôler la température d'un liquide de pression et de commande par une connexion de dérivation selon la revendication 1,
**caractérisée en ce que**
- les raccords (3, 4, 5 et 6) sur le carter de vanne (2) sont sollicités avec des courants de liquide (7', 8', 9' et 10') de telle sorte que le courant de liquide (7') éventuellement chaud parvienne sur le cylindre de commande (13), de sorte qu'il chauffe l'élément en matière extensible (18) par échange de chaleur entre le cylindre de commande (13), le piston (19) et l'épaulement de commande (25) de manière indirecte et donc ralentie.

4. Vanne thermostatique pour contrôler la température d'un liquide de pression et de commande par une connexion de dérivation selon l'une quelconque des revendications 1 à 3, **caractérisée en ce que**
- le cylindre de commande (13) est réalisé avec les parties aplaties (15) et les ouvertures en forme de fenêtre (16) ainsi que les rainures d'équilibrage de la pression (26) selon une possibilité de fabrication donnée, d'une seule pièce avec le carter de vanne (2) .
